# EUROPEAN PATENT SPECIFICATION

(11) **EP 1 244 526 B1**
(45) Date of publication and mention of the grant of the patent: **04.08.2004**
(21) Application number: 00976605.6
(22) Date of filing: 20.10.2000
(51) Int. Cl.: B05D 7/00, H01B 3/44, C09D 123/08

(54) **Electronic cable provided with corrosion-protected tape.**
Elektronikkabel mit korrosionsgeschütztem Band
Cable electronique pourvu d'un ruban avec revetement anticorrosion.

(30) Priority: 22.10.1999 US 160988 P; 12.06.2000 US 592569
(43) Date of publication of application: 02.10.2002
(73) Proprietor: CommScope, Inc. of North Carolina, Hickory, NC 28602 (US)
(72) Inventor: CELLA, Robert, Fairlawn, NJ 07410-4936 (US); ROSE, James, Hawthorne, NJ 07506-0306 (US); HARENCAK, Paul, Paramus, NJ 07652-5738 (US)
(74) Representative: Doireau, Marc
(86) International application number: PCT/US2000/029007
(87) International publication number: WO 2001/030513

(56) References cited:
- WO-A-98/10023
- US-A- 3 730 792
- US-A- 3 829 340
- US-A- 3 908 066
- US-A- 4 273 695
- DATABASE WPI Section Ch, Week 198628 Derwent Publications Ltd., London, GB; Class A81, AN 1986-179937 XP002158892 & JP 61 113676 A (NIPPON STEEL CORP), 31 May 1986 (1986-05-31)

## Description

### BACKGROUND OF THE INVENTION

### Field of the Invention

The present invention is directed to electronic signal cables with a shielding tape provided with an anti-corrosion coating.

Conventional electronic cables, such as coaxial and twisted pair cables, use metal tapes or foils to reduce the interference of near- and far-field EMI/RFI on the signal being delivered and to reduce the emission of electrical signals from the cable. However, over time, a buildup of metal oxides on the foil surface (due to corrosion) will, eventually, render the cable useless for this purpose by reducing the effectiveness of the transmitted signal.

One conventional method of reducing the negative effects of corrosion is to use flooding compounds, such as wax and/or oil based materials that are spread on the cable. Upon cooling of the cable, the physical properties of the flooding compounds change, leaving a waxy residue on the cable that must be removed prior to use. Thus, this method is undesirable in many applications because of the expense, the degradation at elevated temperatures, and the environmental effects of the flooding compounds.

What is needed is a metal tape or foil that can be used for the fabrication of electronic cables that will not be subject to the corrosion effects currently seen on conventional tapes and that also facilitates straightforward manufacturing capabilities.

### SUMMARY OF THE INVENTION

In view of the foregoing, it would be desirable to provide an electronic signal cable with a shielding tape that eliminates the effects of corrosion. According to the present invention, a method for forming an anti-corrosive coating on a shielding tape includes reformulating an copolymer composition with a cross-linking material. The resulting copolymer composition is then applied to the tape and cured to form a cross-linked copolymer. According to an embodiment of the present invention, the tape includes multi-ply laminates of metal and plastic films.

In a preferred embodiment, the tape is a metal foil plastic laminate having a thickness of 0,000635 cm (0.00025 inches) to 0,01016 (0.004 inches).

The resulting surface coating can provide anti-corrosion properties to the metal and offer a bonding layer to olefinic compounds, advantageous in some shielded cable applications.

Further features and advantages of the invention, as well as the structure and operation of various embodiments of the invention, are described in detail below with reference to the accompanying drawings.

### BRIEF DESCRIPTION OF THE DRAWINGS

The accompanying drawings, which are incorporated herein and form part of the specification, illustrate, but do not limit, the present invention and, together with the description, further serve to explain the principles of the invention and to enable a person skilled in the pertinent art to make and use the invention.
Figure 1 is a flowchart of a process of forming an anti-corrosive coating according to an embodiment of the present invention.
Figure 2 is a schematic diagram of an electronic cable that incorporates metal layers coated with an anti-corrosion coating.

### DETAILED DESCRIPTION OF THE INVENTION

The present invention pertains to a method for the fabrication an anti-corrosion tape to be used in electronic cables. Further, the present invention pertains to an anti-corrosion coating that includes a cross-linked copolymer composition that is applied to metal foils or multi-ply laminates of metal and plastic film, and plastic film found within an electronic cable. Preferably, the metal foil has a thickness from 0.00025 inches to about 0.004 inches. The present invention provides a new tape design that substantially reduces the effect of corrosion when used as a shield in electronic cables. In addition, the present invention provides a new anti-corrosion tape design while forming a bonded tape that is useful in some shielded cable applications. The new tape design utilizes a solvent-based coating that can be applied as a very thin layer on the metal surface. Preferably, the solvent is water.

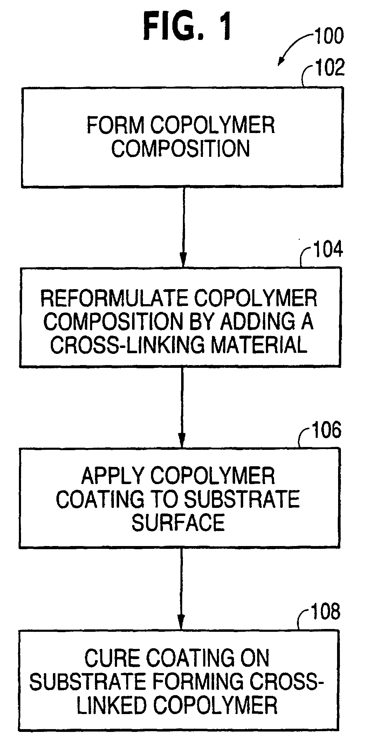

Fig. 1 shows a flowchart of the process 100 of forming an anti-corrosive coating according to one embodiment of the present invention. The anti-corrosive coating comprises a cross-linked copolymer coating that is designed to optimize the life of metals to which it is applied.

In step 102, a copolymer composition is formed. This composition can be in the form of a mixture or in solution. Preferably, the composition is formed through dispersion in an aqueous (or other solvent-based) solution. According to the invention, the constituents of the composition include from about 10% to about 40% copolymer (solid) and about 60% to about 90% water (or other solvent) solution, based on the combined weight of the polymer and solvent. According to one embodiment, the constituents of the composition include about 25 wt. % copolymer (solid) and about 75 wt. % water (or other solvent) solution, based on the entire weight of the polymer and solvent.

In a preferred embodiment, the copolymer is an acrylic acid-based copolymer, such as ethylene-acrylic acid, ethylene-methacrylic acid, ionomers, and the like. For example, the copolymer can include about 5 wt. % to about 30 wt. % acrylic acid and 70 wt. % to 95 wt. % ethylene, based on the weight of the copolymer. Alternatively, the acrylic acid-based copolymer can comprise an ethylene-methacrylic acid copolymer, having a concentration of about 13%, based on weight of the copolymer. Many acrylic acid-based copolymers, such as an ethylene-acrylic acid copolymer consisting of about 20 wt. % acrylic acid, based on the weight of the copolymer, can be purchased from commercial vendors.

In step 104, the copolymer composition is reformulated. The reformulation step includes adding a cross-linking agent to the copolymer composition. These constituents can be mixed according to conventional techniques.

The cross-linking agent improves the bonding of the composition to metal. In a preferred embodiment, the cross-linking agent comprises aziridine, or other carboxyl reactive crosslinking agents, such as urea-formaldehyde, epoxies, and the like, which can be commercially purchased. The amount of cross-linking agent can be from about 1 wt. % to about 10 wt. %, based on the weight of the coating solution. Further, the reformulation step can also include adding an amount of solvent to further decrease the concentration of solids in the composition. This reformulation can be performed at any temperature above the freezing point, such as room temperature. This reformulation provides bondability of the coating to other materials to ensure end product functionality, namely anti-corrosive properties in cable applications.

In step 106, the resulting copolymer composition is applied to a surface of a substrate as a coating. The substrate can be a metal foil, a multi-ply laminate of metal and plastic film, or plastic film. Preferably, the metal can be aluminum, copper, steel, or other metals, that can be used in electronic cabling. For example, the substrate can comprise thin layers of aluminum, on the order of .00035 inches in thickness, that are bonded on one or both sides of a plastic film.

The coating step can be performed by any number of conventional techniques, including, but not limited to gravure coating, roll coating, and spray-coating. According to the invention, the applied coating is a very thin layer, with coating thicknesses ranging from 0,000127 cm (0.00005 inches) to 0,00254 cm (0.001 inches).

Preferably, this coating is to be applied to multi-ply laminates of metal, such as aluminum, and plastic film from 0.00025 inch to about 0.004 inch in thickness that are used in shielding (or other barrier) for electronic cables and enhances their functionality by providing a corrosion-resistant electrical, moisture, and/or thermal shielding. The resulting coating is also resistant to most conventional solvents. In addition, the coating can be applied to one or more metal surfaces of multiple laminated substrates, i.e., thin layers of metal (e.g., Al or Cu) laminated to plastic based films. Such multiple laminated substrates can be commercially purchased under the trade name LAMIGLAS. The coating can also be applied to thin layers of metal laminated to thin layers of plastic film and/or woven or non-woven fabrics, such as those sold under the trade name INSULFAB.

After the copolymer coating is applied to the surface of the substrate, the coating is cured on the substrate surface in step 108. In the curing step, the solvent is dried off and the cross-linking agent is activated to begin cross-linking. For example, curing can be accomplished by placing a coated metal material in an oven heated at 150° to 200° for several seconds. Alternatively, the coating may also be cured at lower temperatures for longer periods of time, or in an oven at elevated temperatures for a shorter period of time, as would be apparent to one of skill in the art given the present description. Other methods of drying/curing include EB, UV, IR, and other conventional techniques. Further, the resulting coating is transparent and does not mask the application onto existing products. Colored coatings can be obtained by adding pigments to the composition.

According to the present invention, a cross-linked copolymer coating will not seal when the exposed surface of the coating is placed in contact with another metal. In other words, by adding the cross-linking material to the ethylene-acrylic acid copolymer, the resulting composition becomes a thermoset. The addition of the cross-linking agent increases the adhesion of the coating to the metal substrate. Once the coating is cured on the surface of the metal, the exposed surface of the coating will not bond to another metal surface. These characteristics make this anti-corrosive coating particularly useful for the industrial fabrication of metal rolls, which are used in the mass production of electronic cable. For example, the metal tape of a large scale fabrication roll can be 66 inches wide and weigh in excess of 4000 pounds. If the coating seals when rolled (i.e., the coating bonds with the back surface of the overlaying metal tape), the tape cannot be later unspooled.

Further, the coating will adhere to some olefinic compounds, such as acrylic acid copolymers, providing a bonded tape, advantageous in some shielded cable applications.

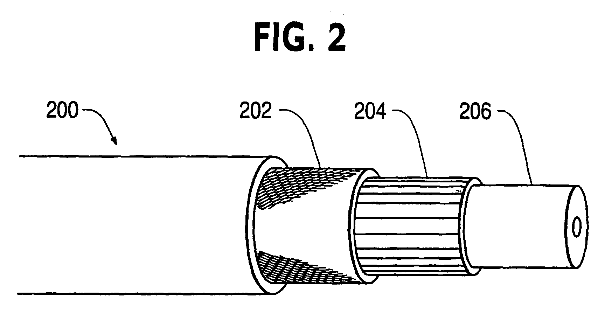

The coating of the present invention can be applied to one or more metal surfaces in a conventional electronic cable to provide a cable with high resistance to corrosion effects. For example, a coaxial cable 200 is shown in Fig. 2. Cable 200 includes an aluminum braid wire 202, an aluminum foil (either bonded or unbonded) layer 204, and a cable core 206. As is well known, the core 206 of a conventional coaxial cable includes an inner electrical conductor surrounded by a dielectric insulating layer. A protective jacket layer surrounds the wire braid layer and forms the outer exposed surface of the coaxial cable. The cross-linked copolymer coating can be applied to one or more surfaces of foil layer 204. The resulting electronic cable is resistant to corrosion.

### Examples

An example anti-corrosion coating was formed. The coating was mixed comprising a dispersion of 66 wt. % ethylene-acrylic acid copolymer, 32 wt. % water, 0.1 wt. % defoamer, and 2 wt. % aziridine. This coating was then applied to a LAMIGLAS substrate using a convential coating technique.

In addition, test samples with a similar coating composition were formed and exposed to a salt water mist for several days. No corrosive effects were found in the test samples coated with the cross-linked copolymer coating. Samples of aluminum tape coated with the anti-corrosion coating were immersed in 10% salt solution in water at 120 degrees Fahrenheit for several days along with same material in tap water. No corrosion was detected on visual examination of the anti-corrosion coated tape.

Further, large scale coating tests were performed using a coating having a composition similar to the composition described above. In this test, the water-based anti-corrosive coating was applied to an uncoated metal tape roll, having a tape thickness of 0.003 inches, using a conventional technique. The coating thickness was less than 0.0001 inches, on the order of about 0.00005 inches, based on the fact that the coating was uniformly applied at a rate of 0.04 ounces per square yard. After curing, the resulting coating could not be removed by application of several conventional solvents.

While the invention has been described in detail and with reference to specific embodiments thereof, it will be apparent to one skilled in the art that various changes and modifications can be made therein without departing from the scope of the invention. Thus, the breadth and scope of the present invention should not be limited by any of the above-described exemplary embodiments.

## Claims

1. An electronic signal cable comprising:
at least one insulated conductor; and
a shielding tape surrounding said at least one insulated conductor,
said shielding tape comprising a laminate of metal foil and plastic film, **characterized in that**
said shielding tape comprises a cross-linked acrylic acid copolymer coating having a thickness of 0.000127 cm to 0.00254 cm applied to at least one metal foil surface, and **in that** said cross-linked coating has an exposed surface that will not bond to another metal surface.

2. An electronic signal cable according to claim 1, wherein said shielding tape comprises a plastic film having an aluminum foil bonded to both sides thereof, said foil layer having a thickness of 0.000635 cm to 0.01016 cm.

3. An electronic signal cable according to claim 1 or 2, wherein said cross-linked copolymer comprises an ethylene-acrylic acid copolymer.

4. An electronic signal cable according to claim 3, wherein said cross-linked copolymer additionally includes a carboxyl reactive cross-linking agent.

5. An electronic signal cable according to claim 4, wherein said reactive cross-linking agent is aziridine at a concentration of about 2% to 5%.

6. An electronic signal cable according to claim 1 or 2, wherein said electronic signal cable is a twisted pair cable and said at least one insulated conductor comprises at least one twisted pair of insulated conductors.

7. An electronic signal cable according to claim 1 or 2, wherein said electronic signal cable is a coaxial cable including a cable core, with said shielding tape surrounding the cable core.

8. An electronic signal cable according to claim 7, additionally including a metal braid shield surrounding the shielding tape.

9. An electronic signal cable according to claim 8 further comprising an outer jacket surrounding the wire braid.

## Patentansprüche

1. Elektronisches Signalübertragungskabel, umfassend:
zumindest einen isolierten Leiter; sowie
ein Abschirmband, das den genannten zumindest einen isolierten Leiter umgibt, wobei das genannte Abschirmband einen Schichtstoff aus Metallfolie und Kunststofffilm umfasst, **dadurch gekennzeichnet, dass**
das genannte Abschirmband eine vemetzte Acrylsäurecopolymer Beschichtung mit einer Stärke von 0,000127 cm bis 0,00254 cm umfasst, die auf zumindest einer Metallfolienoberfläche aufgebracht ist und dass die genannte vernetzte Beschichtung eine freiliegende Fläche aufweist, die nicht mit einer anderen Metalloberfläche verbunden ist.

2. Elektronisches Signalübertragungskabel nach Anspruch 1, wobei das genannte Abschirmband einen Kunststofffilm umfasst, an welchem eine Aluminiumfolie auf beiden Seiten befestigt ist, wobei die Folienschicht eine Stärke von 0,000635 cm bis 0,01016 cm aufweist.

3. Elektronisches Signalübertragungskabel nach Anspruch 1 oder 2, wobei das genannte vernetzte Copolymer ein Ethylen-Acrylsäure-Copolymer umfasst.

4. Elektronisches Signalübertragungskabel nach Anspruch 3, wobei das genannte vernetzte Copolymer zusätzlich ein mit Carboxyl reagierendes Vernetzungsmittel umfasst.

5. Elektronisches Signalübertragungskabel nach Anspruch 4, wobei das genannte reaktive Vernetzungsmittel Aziridin in einer Konzentration von etwa 2 % bis 5 % ist.

6. Elektronisches Signalübertragungskabel nach Anspruch 1 oder 2, wobei das genannte elektronische Signalübertragungskabel ein verdrilltes Kabelpaar ist und der zumindest eine isolierte Leiter zumindest ein verdrilltes Kabelpaar aus isolierten Leitern umfasst.

7. Elektronisches Signalübertragungskabel nach Anspruch 1 oder 2, wobei das genannte elektronische Signalübertragungskabel ein Koaxialkabel ist, das einen Kabelkern einschließt, wobei das genannte Abschirmband den Kabelkern umgibt.

8. Elektronisches Signalübertragungskabel nach Anspruch 7, das zusätzlich eine geflochtene Metallabschirmung umfasst, die das Abschirmband umgibt.

9. Elektronisches Signalübertragungskabel nach Anspruch 8, ferner umfassend ein äußere Ummantelung, die die geflochtene Abschirmung umgibt.

## Revendications

1. Câble d'interface électronique comprenant :
au moins un conducteur isolé ; et
un ruban de blindage entourant ledit au moins un conducteur isolé,
ledit ruban de blindage comprenant un stratifié de feuille métallique et de film en plastique, **caractérisé en ce que** :
ledit ruban de blindage comprend un revêtement en copolymère d'acide acrylique réticulé ayant une épaisseur de 0,000127 cm à 0,00254 cm appliqué sur au moins une surface de feuille métallique, et **en ce que** ledit revêtement réticulé a une surface exposée qui ne se lie pas à une autre surface métallique.

2. Câble d'interface électronique selon la revendication 1, dans lequel ledit ruban de blindage comprend un film en plastique ayant une feuille en aluminium liée aux deux côtés de celui-ci, ladite couche de la feuille ayant une épaisseur de 0,000635 cm à 0,01016 cm.

3. Câble d'interface électronique selon la revendication 1 ou 2, dans lequel ledit copolymère réticulé comprend un copolymère d'acide éthylène acrylique.

4. Câble d'interface électronique selon la revendication 3, dans lequel ledit copolymère réticulé comprend de plus un agent de réticulation réactif carboxyle.

5. Câble d'interface électronique selon la revendication 4, dans lequel ledit agent de réticulation réactif est l'aziridine à une concentration de 2 % à 5 % environ.

6. Câble d'interface électronique selon la revendication 1 ou 2, dans lequel ledit câble d'interface électronique est un câble à paires torsadées et ledit au moins un conducteur isolé comprend au moins une paire torsadée de conducteurs isolés.

7. Câble d'interface électronique selon la revendication 1 ou 2, dans lequel ledit câble d'interface électronique est un câble coaxial comprenant une âme de câble, avec ledit ruban de blindage entourant l'âme de câble.

8. Câble d'interface électronique selon la revendication 7, comprenant en plus un blindage tressé métallique entourant le ruban de blindage.

9. Câble d'interface électronique selon la revendication 8, comprenant en outre une enveloppe externe entourant la tresse de fil métallique.
